# FASCICULE DE BREVET EUROPEEN

(11) **EP 3 049 163 B1**
(45) Date de publication et mention de la délivrance du brevet: **13.09.2017**
(21) Numéro de dépôt: 14752907.7
(22) Date de dépôt: 28.07.2014
(51) Int. Cl.: A63B 24/00, A63B 43/00, A63B 39/00, A63B 21/005, H02N 2/18, G01L 9/00, A63B 45/00

(54) **DISPOSITIF DESTINÉ À SUBIR DES CHOCS ET COMPRENANT DES MOYENS INTERNES PIEZOÉLECTRIQUES DE RÉCUPÉRATION D'ÉNERGIE**
VORRICHTUNG ZUM ABWEHREN VON STÖSSEN MIT EINEM INNEREN PIEZOELEKTRISCHEN ENERGIERÜCKGEWINNUNGSMITTEL
DEVICE FOR RECEIVING IMPACTS, COMPRISING INNER PIEZOELECTRIC ENERGY RECOVERY MEANS

(30) Priorité: 25.09.2013 FR 1359232
(43) Date de publication de la demande: 03.08.2016
(73) Titulaire: Commissariat à l'Énergie Atomique et aux Énergies Alternatives, 75015 Paris (FR)
(72) Inventeur: SAVELLI, Guillaume, 38000 Grenoble (FR); CORONEL, Philippe, 38530 Barraux (FR); GUERIN, Chloé, 38000 Grenoble (FR)
(74) Mandataire: Cabinet Laurent & Charras
(86) Numéro de dépôt international: PCT/FR2014/051951
(87) Numéro de publication internationale: WO 2015/044542

(56) Documents cités:
- WO-A1-2007/052206
- KR-A- 20050 014 598
- US-A- 2 020 484
- US-A- 5 883 569
- US-A1- 2004 162 170

## Description

### DOMAINE DE L'INVENTION

L'invention a trait au domaine de la fonctionnalisation de balles et ballons, en particulier les balles et ballons déformables et sous pression, notamment dans le domaine du sport et/ou de la rééducation physique, comme par exemple les balles de tennis.

### ETAT DE LA TECHNIQUE

Dans les sports de balle et de ballon et la rééducation physique à base de tels objets, il est utile de disposer de statistiques qui permettent aux joueurs d'analyser leur jeu et au personnel médical d'évaluer la qualité des exercices pratiqués par les patients. Usuellement, ces statistiques sont récoltées manuellement en comptant par exemple le nombre de frappes, rebonds ou autres qu'un joueur ou un patient exerce sur une balle pendant une durée prédéterminée.

En outre, certains sports consomment beaucoup de balles, ces dernières ayant une durée de vie limitée, balles qu'il est nécessaire de recycler, ce qui génère un coût non négligeable. La Fédération Française de Tennis estime ainsi à plus d'un million le nombre de balles de tennis consommées chaque année dans les divers clubs et écoles de tennis sur le territoire français.

Il existe ainsi un intérêt à intégrer dans les balles et les ballons des fonctions électroniques permettant de réaliser automatiquement des statistiques et/ou de convertir et stocker l'énergie mécanique prodiguée à ces objets lors de leur utilisation en énergie électrique.

On connait du document US 2011/136603 une balle de sport comportant une coque déformable délimitant un volume interne sous pression, comme par exemple une balle de tennis, et comportant un circuit de récupération d'énergie à base de matériau piézoélectrique, qui convertit une partie de l'énergie mécanique reçue par la coque sous l'effet de sa déformation par un impact, en énergie électrique, et qui stocke l'énergie électrique ainsi produite dans une batterie interne à la balle. L'énergie ainsi récupérée et stockée est utilisée par un circuit interne à la balle, comme par exemple un accéléromètre, un capteur de pression ou un système GPS.

Ce document est cependant muet sur les moyens d'intégrer ces éléments électriques dans la balle de manière à gêner au minimum l'aérodynamique et les déformations de celle-ci. En effet, la balle fonctionnalisée doit être sensiblement identique aux balles classiques afin d'être utilisée en lieu et place de celles-ci, notamment dans le domaine sportif dans lequel les balles et les ballons doivent satisfaire des critères très sévères pour être jugés conformes. En outre, ce document est également muet sur ce qu'il advient des circuits embarqués dans les balles et les ballons une fois ceux-ci hors d'usage.

Le document WO 2007/052206 A1 décrit un dispositif comportant une coque déformable délimitant un volume interne, comprenant :
- une membrane piézoélectrique souple disposée entre une paroi interne de la coque déformable et un matériel de remplissage, ladite membrane étant apte à produire de l'énergie électrique sous l'effet d'une déformation de la coque ;
- un circuit électrique connecté électriquement à la membrane piézoélectrique, comportant un élément de stockage d'énergie électrique produite par celle-ci et une structure rigide ; et
- des éléments longilignes de connexion du circuit électrique, chaque élément de connexion étant disposé entre la structure rigide du circuit électrique et la paroi interne de la coque déformable, et étant solidaire de la membrane piézoélectrique et de la structure rigide.

Le document US 2 020 484 A décrit un dispositif comportant une coque déformable délimitant un volume interne sous une pression de gaz supérieure à la pression atmosphérique, comprenant :
- un circuit électrique, comportant un élément de stockage d'énergie électrique ; et
- des éléments élastiques longilignes de maintien du circuit électrique selon une position prédéterminée du volume interne.

### EXPOSE DE L'INVENTION

Le but de la présente invention est de proposer un dispositif à coque déformable délimitant un espace interne sous pression qui comprend des circuits électriques mettant au moins en oeuvre une fonction de conversion et de stockage d'énergie, qui présente un fonctionnement sensiblement identique à celui d'un dispositif dépourvu de tels circuits, et dont les circuits électriques sont aisément recyclables une fois le dispositif hors d'usage.

A cet effet l'invention a pour objet un dispositif comportant une coque déformable délimitant un volume interne sous une pression de gaz supérieure à la pression atmosphérique, comprenant :
▪ une membrane piézoélectrique souple, plaquée contre une paroi interne de la coque déformable sous l'effet de la pression régnant dans le volume interne, ladite membrane étant apte à produire de l'énergie électrique sous l'effet d'une déformation de la coque ;
▪ un circuit électrique connecté électriquement à la membrane piézoélectrique, comportant un élément de stockage de l'énergie électrique produite par celle-ci et une structure rigide; et
▪ des éléments élastiques longilignes de maintien du circuit électrique selon une position prédéterminée du volume interne, chaque élément de maintien étant disposé entre la structure rigide du circuit électrique et la paroi interne de la coque déformable et étant solidaire de la membrane piézoélectrique et de la structure rigide.

Par « déformable », on entend ici une coque apte à se déformer sous l'effet d'impacts subis par celle-ci au cours d'une utilisation standard de la coque. A contrario, par « rigide », on entend un élément ne se déformant sensiblement pas lors dudit usage.

En d'autres termes, le matériau piézoélectrique prend la forme d'une membrane, usuellement très fine d'une épaisseur inférieure au millimètre, plaquée contre la coque. Au regard des épaisseurs de coque usuellement constatées pour les balles et ballons, typiquement de plusieurs millimètres, la présence de la membrane piézoélectrique ne perturbe donc pas les propriétés globales de ces objets.

En outre, le circuit électrique interne est maintenu en place, notamment au centre d'une balle ou d'un ballon sphérique, par des éléments élastiques exerçant des forces de rappel vers cette position et pouvant suivre la déformation que subit la coque externe sous l'effet d'impacts. Tout d'abord, en maintenant le circuit électrique dans une position appropriée, ce dernier perturbe au minimum le fonctionnement de l'objet, notamment en laissant le centre de gravité inchangé. Ensuite, en adoptant des éléments de maintien non rigides, les propriétés de déformation de la coque restent également inchangées. En effet, en adoptant les éléments de maintien rigides, la coque serait de fait moins déformable, et donc inutilisable dans certains sports, comme le tennis par exemple, pour lesquels la déformation importante de la balle est essentielle au jeu.

Enfin, l'ensemble formé de la membrane, du circuit électrique et des éléments de maintien est aisément extractible de la coque. En effet, une fois celle-ci éventrée, suite à son recyclage par exemple, l'annulation de la surpression se traduit par le décollement de la membrane piézoélectrique de la coque. Cet ensemble est alors aisément récupérable et peut être réutilisé dans une autre coque, la mise sous pression du volume interne de la coque induisant le plaquage de la membrane contre la paroi interne de celle-ci.

Selon un mode de réalisation, les éléments de maintien comprennent des ressorts logés en compression entre la structure rigide du circuit électrique et la paroi interne de la coque déformable. Les ressorts présentent en effet l'avantage de nécessiter un volume limité de matière pour mettre en oeuvre de manière efficace une force de rappel, et perturbent donc au minimum le fonctionnement du dispositif.

Selon un mode de réalisation, la coque déformable définit une balle de tennis, dans lequel la position prédéterminée est le centre de la balle de tennis, dans lequel le circuit électrique est inscrit dans un volume sphérique concentrique à la balle de tennis et de diamètre inférieur à la moitié du diamètre interne de la coque déformable, et dans lesquels les éléments de maintien sont déformables sans détérioration sur au moins environ un tiers de la longueur qu'ils présentent lorsque la balle ne subit aucune déformation. En effet, une balle de tennis subit au cours du jeu des déformations pouvant atteindre un tiers de son diamètre. Le volume utile d'une balle de tennis dans lequel peut être logé le circuit électrique sans risque d'entrer en contact avec la coque déformée est donc limité à une sphère très réduite. En prévoyant un circuit électrique circonscrit dans cette sphère utile et des éléments de maintien pouvant se déformer de manière importante, la balle de tennis peut donc subir les déformations extrêmes exigées sans risquer de détériorer ou détruire le circuit électrique.

Selon un mode de réalisation, la membrane piézoélectrique comprend un film de polyfluorure de vinylidène ou de titano-zirconate de plomb. Notamment, le film présente une épaisseur comprise entre 10 micromètres et 200 micromètres. La membrane est ainsi légère, flexible et robuste mécaniquement.

Selon un mode de réalisation, l'élément de stockage d'énergie électrique comporte une micro-batterie formée sur un substrat souple ou rigide. Ce type de moyen de stockage d'énergie électrique est très léger, usuellement d'un poids et d'une surface faibles pour une grande capacité de stockage.

Selon un mode de réalisation, les éléments de maintien sont constitués de ressorts, notamment en acier inoxydable ou non, notamment en acier inoxydable AlSl302 ou AlSl316, en alliage de nickel et de chrome, par exemple de l'inconel® 600, 625 ou 718, en cuivre ou en béryllium.

Selon un mode de réalisation, au moins deux des éléments de maintien sont conducteurs de l'électricité et forment deux connexions électriques entre la membrane piézoélectrique et le circuit électrique pour la transmission de l'énergie électrique produite par la membrane au circuit électrique. Il n'est ainsi pas nécessaire de prévoir d'autres types de connexion électrique, comme notamment des fils soudés. En outre, ces connexions sont robustes.

Selon un mode de réalisation, le circuit électrique est constitué d'étages électriques parallélépipédiques agencés en parallèle dans un cadre ou une armature rigide. Ce type de configuration permet d'obtenir un circuit compact, et donc perturbant de manière minime le fonctionnement d'une balle ou d'un ballon.

Selon un mode de réalisation, le circuit électrique comporte un circuit de production de données à partir de l'énergie électrique produite par la membrane piézoélectrique, et un circuit de transmission sans fil desdites données à l'extérieur de la coque déformable, lesdits circuits de production et de transmission étant alimentés par l'élément de stockage d'énergie électrique. Notamment, le circuit de production de données est apte à compter le nombre d'impulsions électriques produites par la membrane piézoélectrique et/ou le circuit de production de données est apte à déterminer un état d'usure du dispositif en fonction du nombre d'impulsions comptées. De manière avantageuse, le circuit électrique comporte un circuit connecté à l'élément de stockage d'énergie électrique et comportant une interface électrique pour la connexion à un circuit externe de récupération de l'énergie stocké dans l'élément lors que le dispositif est ouvert.

L'invention a également pour objet un dispositif destiné à être intégré dans un volume interne d'une coque déformable portée à une pression supérieure à la pression atmosphérique, comprenant :
▪ une membrane piézoélectrique souple apte à générer de l'énergie électrique sous l'effet de contraintes mécaniques;
▪ un circuit électrique connecté électriquement à la membrane piézoélectrique, comportant un élément de stockage de l'énergie électrique produite par celle-ci et une structure rigide;
▪ des éléments élastiques longilignes de maintien solidaire de la structure rigide du circuit électrique et solidaire de la membrane piézoélectrique.

L'invention a également pour objet un procédé de fabrication d'un dispositif comportant une coque sphérique déformable délimitant un volume interne sous une pression de gaz supérieure à la pression atmosphérique, comportant :
▪ la réalisation d'une première et d'une seconde demi-coques déformables ;
▪ la réalisation d'un ensemble comportant la membrane piézoélectrique, le circuit électrique, et les éléments de maintien, la longueur des éléments de maintien étant choisie pour que ces derniers soient en compression lorsque l'ensemble est logé dans la coque déformable ;
▪ l'insertion de l'ensemble dans la première demi-coque ;
▪ le report de la seconde demi-coque sur la première demi-coque de manière à former la coque déformable ; et
▪ la mise sous pression du volume interne de la coque de manière à plaquer la membrane piézoélectrique sur la paroi interne de la coque déformable.

### BREVE DESCRIPTION DES FIGURES

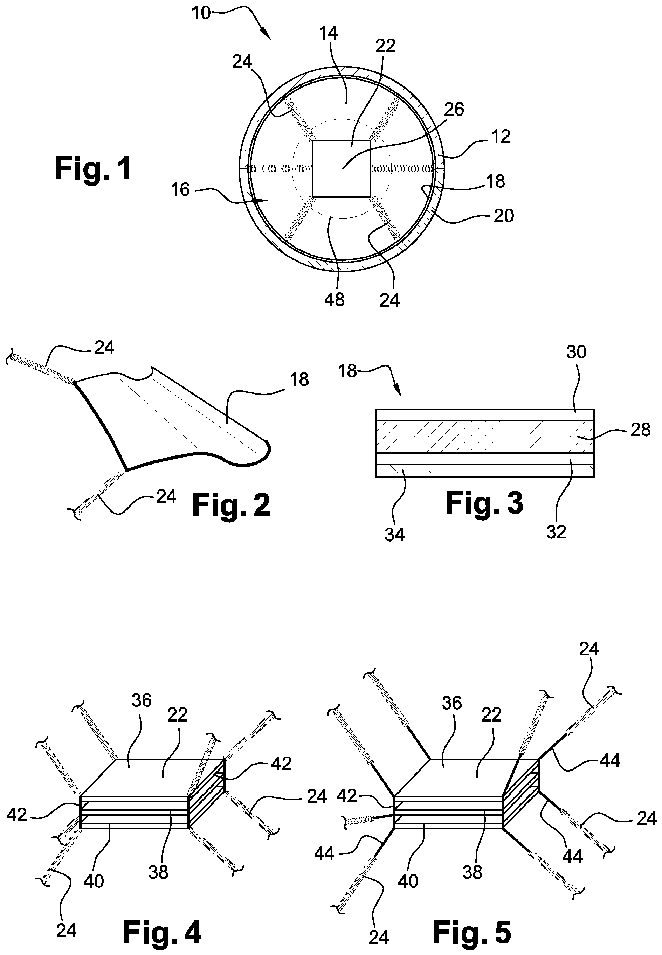

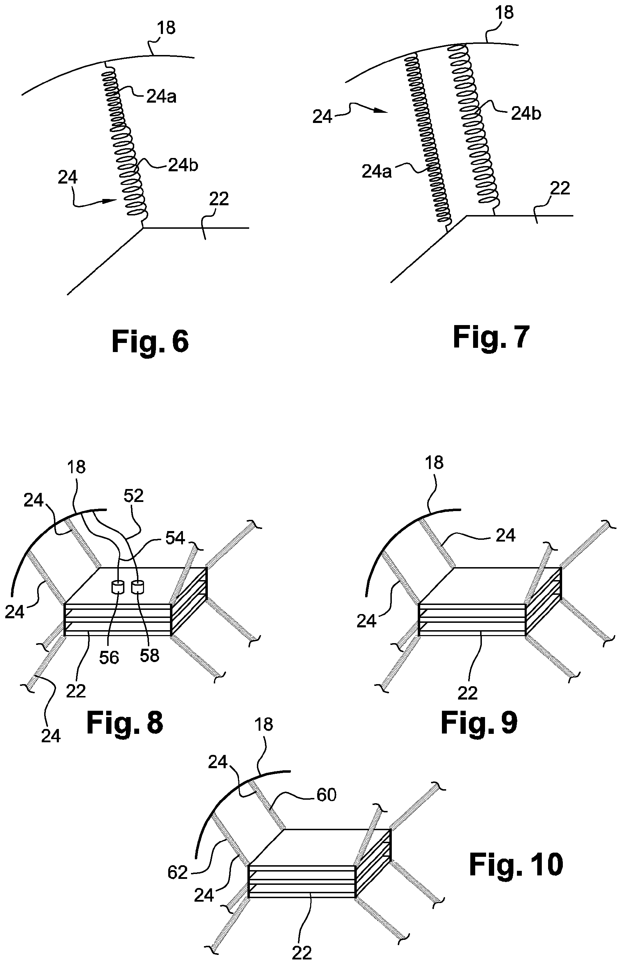

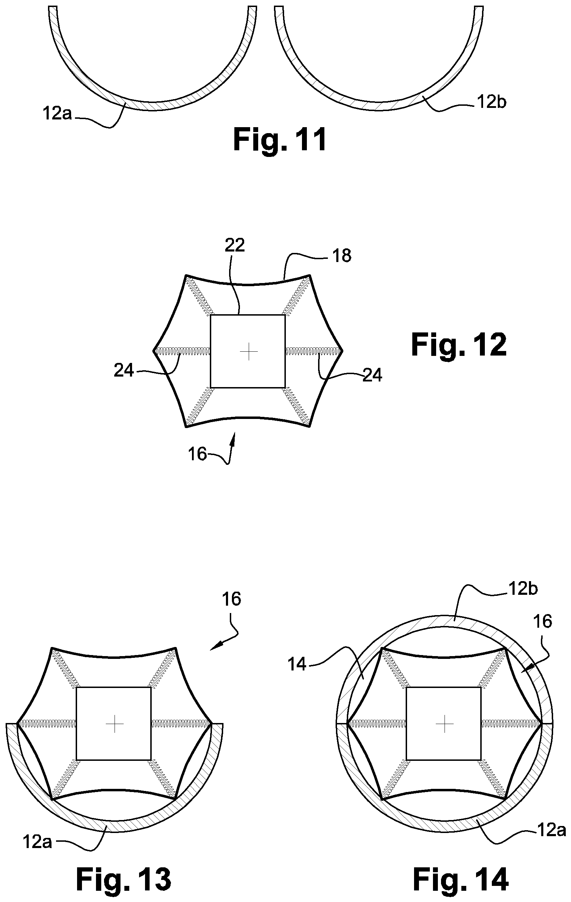

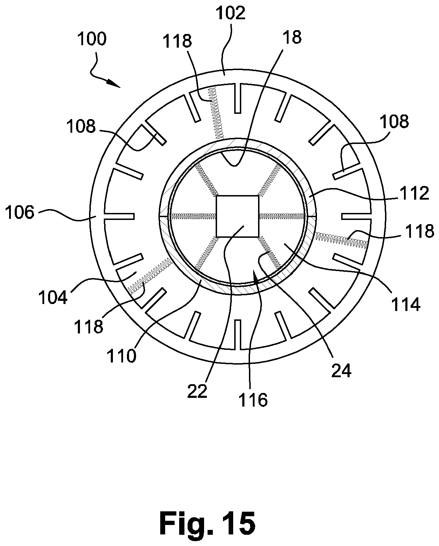

L'invention sera mieux comprise à la lecture de la description qui va suivre, donnée uniquement à titre d'exemple, et réalisée en relation avec les dessins annexés dans lesquels :
▪ la figure 1 est une vue en coupe schématique d'une balle de tennis conforme à l'invention ;
▪ la figure 2 est une vue schématique en perspective d'une portion de la membrane piézoélectrique flexible et des éléments de maintien de la figure 1 ;
▪ la figure 3 est une vue schématique en coupe de la membrane piézoélectrique de la figure 1 ;
▪ la figure 4 est une vue schématique en perspective du circuit et des éléments de maintien électrique de la figure 1 ;
▪ la figure 5 est une vue schématique en perspective du circuit et des éléments de maintien électrique selon une variante de l'invention ;
▪ les figures 6 et 7 sont des vues schématiques des éléments de maintien selon deux variantes de l'invention ;
▪ les figures 8, 9 et 10 sont des vues schématiques de connexions électriques entre la membrane piézoélectrique et le circuit électrique de la figure 1 selon plusieurs variantes de l'invention ;
▪ les figures 11 à 14 sont des vues schématiques en coupe illustrant un procédé de fabrication de la balle de tennis de la figure 1 ; et
▪ la figure 15 est une vue schématique en coupe d'un autre mode de réalisation de l'invention appliquée à un objet à coque souple.

### DESCRIPTION DETAILLEE DE L'INVENTION

Il va à présent être décrit en relation avec les figures 1 à 8 une balle de tennis **10** conforme à l'invention. La balle de tennis **10** comprend une coque déformable **12**, par exemple en caoutchouc, définissant un volume interne creux **14** dans lequel règne de l'air sous une pression supérieure à la pression atmosphérique, notamment une pression de l'ordre de 2 bars.

En se référant plus particulièrement à la figure 1, la balle de tennis **10** comporte dans le volume **14**, un système de récupération d'énergie **16** comprenant :
▪ une membrane piézoélectrique souple **18** épousant la face interne **20** de la coque **12**, avantageusement sur la totalité de celle-ci, la membrane piézoélectrique **18** libérant des charges électriques lorsqu'elle se déforme et donc libérant des charges électriques lorsque la coque **12** se déforme, par exemple sous l'effet d'une frappe ou d'un rebond de la balle **10** ;
▪ un circuit électrique **22** comprenant un élément de conversion des charges électriques produites par la membrane en un courant et/ou une tension constante et un ou plusieurs éléments de stockage de l'énergie électrique produites par l'élément de conversion , ainsi qu'optionnellement un circuit électronique mettant en oeuvre une ou plusieurs fonctions décrites ci-après ;
▪ un ensemble d'éléments de maintien **24** positionnant le circuit électrique **22** au centre **26** de la balle **10** en mettant en oeuvre des forces de rappel vers ladite position, et aptes à se déformer en relation avec les déformations subies par la coque **12** afin de ne pas s'opposer à celles-ci.

Comme illustré aux figures 2 et 3, la membrane piézoélectrique **18**, comporte :
▪ un film piézoélectrique **28**, d'une épaisseur avantageusement comprise entre 10 micromètres et 200 micromètres, réalisé en une seule pièce ou en plusieurs pièces;
▪ deux couches métalliques **30**, **32**, d'une épaisseur de quelques nanomètres à quelques dizaines de micromètres chacune, déposées de part et d'autre du film piézoélectrique **28**, constituées par exemple d'argent, de nitrure de cuivre, d'aluminium et formant deux électrodes de collecte des charges électriques produites par le film **28** ;
▪ optionnellement un substrat flexible **34**, par exemple en plastique, tel que du polyéthylène téréphtalate (« PET ») ou du polyéthylène naphtalate (« PEN »), sur lequel est réalisé l'empilement du film piézoélectrique **28** intercalé entre les électrodes métalliques **30**, **32**.

Avantageusement, le film piézoélectrique **28** est constitué de polyfluorure de vinylidène (« PVDF ») qui présente l'avantage d'être à la fois léger, souple et mécaniquement résistant, les électrodes métalliques **30**, **32** pouvant être déposées directement sur les faces du film sans utiliser de substrat **34**. En variante, le film **28** est constitué de titano-zirconate de plomb (« PZT »), d'oxyde de zinc (« ZnO »), ou d'un matériau composite d'au moins deux matériaux parmi ceux-ci et le PVDF. En raison des matériaux utilisés pour la membrane **18** et de l'épaisseur de celle-ci, l'influence de la membrane sur le comportement aérodynamique et de déformation de la balle **10** est sensiblement nulle.

Le circuit électrique **22** est quant à lui conçu pour également perturber au minimum le comportement aérodynamique de la balle **10**. Tout d'abord, le circuit électrique **22** est choisi pour être le plus léger possible compte tenu des fonctions qu'il met en oeuvre. Notamment, l'élément de stockage d'énergie électrique est avantageusement constitué d'une micro-batterie formée sur un substrat souple ou rigide. Par exemple, l'élément de stockage est une micro-batterie à substrat rigide de la gamme « EnerChip » de la société Cymbet® Corp., par exemple une micro-batterie de référence « CBC050-M8C » d'une surface de 8x8 mm² pour une capacité de 50 µAh, ou bien une micro-batterie à substrat souple de la société Solicore®, Inc.,par exemple un micro-batterie de référence « SF-2529-10EC » d'une surface pliable de 25,75x29 mm² pour une capacité de 10 mAh. En variante, l'élément de stockage d'énergie électrique comprend une ou plusieurs capacités et/ou un ou plusieurs super-capacités.

Le circuit **22** est également avantageusement conçu pour présenter une symétrie tridimensionnelle la plus élevée possible, l'idéal étant que le circuit **22** soit de forme sphérique et de densité uniforme. Toutefois, compte tenu des procédés usuels de fabrication des circuits électriques et électroniques, ces derniers prennent généralement une forme parallélépipédique. De manière avantageuse, le circuit **22** prend la forme d'un empilement de circuits parallélépipédiques, tel qu'illustré aux figures 4 et 5, de manière à obtenir une forme de parallélépipède rectangle, avantageusement un cube.

Le circuit **22** comporte ainsi notamment :
▪ un premier étage **36** connecté électriquement à la membrane **18**, et convertissant les charges produites par celle-ci, essentiellement sous la forme d'un courant non constant, en un courant constant et/ou une tension constante, usuellement utilisée pour charger une micro-batterie, comme par exemple un circuit de type « LTC3588 » de la société Linear Technolgy Corp.,
▪ un second étage **38**, connecté électriquement au premier étage **36**, comprenant une micro-batterie se chargeant grâce au courant et/ou la tension constante produite par le premier étage,
▪ et optionnellement un ou plusieurs troisièmes étages **40** connectés électriquement à la batterie du second étage **38** pour leur alimentation électrique, et mettant en oeuvre une ou plusieurs fonctions électroniques comme cela sera décrit plus en détails par la suite, ou comprenant une ou plusieurs éléments de stockage d'énergie électrique supplémentaires.

Les étages sont par ailleurs solidarisés au moyen d'une armature rigide **42** à laquelle sont fixés les éléments de maintien **24**.

Les éléments de maintien **24** ont quant à eux une forme longiligne, et chacun des éléments **24** est fixé à une première extrémité au circuit électrique **22**, notamment à l'armature **42** de celui-ci, et est également fixé à la membrane piézoélectrique **18**.

Les éléments **24** sont fixés à l'armature du circuit **22** et à la membrane **18** par collage, par soudure, par contact magnétique, par visserie, par un système autobloquant ou au moyens d'un système de type « *quickconnect* ».En variante, la fixation est réalisée à l'aide d'un matériau polymère, comme par exemple un polyuréthane, une colle époxy, une colle anaérobie comportant un mélange d'un diméthacrylates de glycol avec une quantité minoritaire de peroxyde et d'accélérateur de prise, un cyanoacrylates, ou un mastic MS polymère à base de silane modifié. En variante, la fixation est réalisée à l'aide de nanofibres, par exemple des nanofibres de collagène, des nanofibres de carbone et de cuivre, des nanofils de SiC comprenant des micro-pointes en carbone.

Le système de récupération d'énergie **16** formé de la membrane **18**, du circuit **22** et des éléments de maintien **24**, forme ainsi un seul et même objet, ce qui facilite son installation dans la balle de tennis **10** ainsi que son retrait, comme cela sera décrit plus en détail par la suite.

Par ailleurs, la seconde extrémité de chacun des éléments **24** repose sur la paroi interne **20** de la coque **12** sans être solidaire de celle-ci, ce qui permet là encore une installation et un retrait simplifié du système **16**. Enfin, la membrane **18** est fixée à la seconde extrémité de chacun des éléments **24**, de sorte que la seconde extrémité repose sur la paroi interne **20** au travers de la membrane **18**, ou à tout le moins une zone proche de cette extrémité, ce qui facilite son déploiement et son plaquage contre la paroi interne **20** de la coque **12** sous l'effet de la pression régnant dans le volume interne **14** de la balle **10**.

Comme illustré à la figure 4, les éléments de maintien **24** sont avantageusement constitués de ressorts, un ressort présentant une force de rappel importante tout en étant creux, et donc léger. Par exemple, les ressorts sont constitués d'un acier inoxydable ou non, notamment un acier inoxydable AlSl302 ou AlSl316, d'alliage de nickel et de chrome, par exemple de l'inconel® 600, 625 ou 718, de cuivre ou de béryllium.

En outre, les ressorts sont choisis pour être déformables selon leur axe principal de rappel et sensiblement plus rigides perpendiculairement à cet axe, ce qui facilite la mise en contact de leur second extrémité avec la coque **12**. Dans le cadre d'un circuit électrique **22** présentant la forme d'un parallélépipède, le nombre de ressorts est avantageusement au nombre de huit, un ressort étant prévu pour chaque coin de circuit **22**. En variante, comme illustré à la figure 5, les éléments de maintien comprennent également une tige rigide **44**, positionnée entre le circuit **22** et les ressorts, afin de rigidifier le système **16** et donc rendre ce dernier plus robuste mécaniquement. Selon une variante de l'invention, les éléments de maintien **24** comprennent également un matériau piézoélectrique, ce qui permet également de récupérer de l'énergie lors de leur déformation.

Avantageusement, le circuit **22** a des dimensions appropriées avec le type de déformation que la balle de tennis est susceptible de subir au cours de son utilisation. On sait qu'une balle de tennis peut se déformer d'un tiers de son diamètre sous la frappe de joueurs expérimentés. Le circuit **22** est donc choisi pour s'inscrire dans une sphère **48** (figure 1), de sorte que la coque **12** ne peut rentrer au contact avec le circuit **22**, y compris lorsque la balle de tennis subit une réduction importante de son diamètre. Par exemple, le circuit **22** s'inscrit dans une sphère de diamètre inférieur à la moitié du diamètre de la balle de tennis **10**, par exemple une sphère de 3 cm de diamètre pour une balle de tennis standard.

Par ailleurs, les éléments de maintien **24** sont conçus pour subir sans détérioration une compression et un étirement supérieur au tiers de la longueur que ceux-ci présentent lorsque la balle est au repos afin d'accompagner ces déformations extrêmes.

Les éléments de maintien **24** présentent en outre une force de rappel en étirement et/ou en compression choisie de manière à ce que le circuit **22** puisse se déplacer dans le volume interne **14** de la balle sans jamais impacter la paroi interne **20** sous l'effet des chocs violents que la balle subit lors d'un match de tennis.

Avantageusement, les éléments de maintien **24** comprennent chacun plusieurs ressorts **24a**, **24b**, par exemple 2, sont mis en série, comme illustré à la figure 6, ou en parallèle, comme illustré à la figure 7, ce qui permet de définir de manière plus aisée un comportement différent des éléments **24** en fonction de l'intensité de l'impact subi par la coque **12**. Notamment, en prévoyant plusieurs ressorts différents, il est possible de concevoir de manière simple des éléments de maintien **24** à la fois peu rigides, c'est-à-dire ne s'opposant pas à la déformation subie par la coque **12**, et suffisamment rigides, c'est-à-dire évitant la collision du circuit **22** sur la coque **12** lors des impacts subis par la coque **12**.

Les figures 8, 9 et 10 illustrent des variantes de connexions électriques entre la membrane piézoélectriques **18** et le circuit électrique **22** pour transmettre à ce dernier les charges électriques produites par la membrane.

Selon une première variante illustrée à la figure 8, les deux électrodes **30**, **32** de la membrane **18** sont connectés aux circuits **22**, notamment son circuit de conversion en courant/tension constant **36**, au moyen de deux fils conducteurs **52**, **54** soudés auxdites électrodes et à deux plots **56**, **58** du circuit **22**. Dans cette variante, les fils **52**, **54** sont libres d'être positionnés indépendamment des éléments **24** et de l'armature **42**.

Selon une seconde variante illustrée à la figure 9, deux des éléments de maintien **24** sont conducteurs d'électricité et sont connectés, par exemple par soudure, aux électrodes **30**, **32** et à des portions conductrices du circuit **22** formant les entrées électriques du circuit **22**, notamment du circuit de conversion **36**.

Selon une troisième variante, illustrée à la figure 10, les éléments **24** sont creux, par exemple constitués de ressorts, et la connexion est réalisée par deux fils conducteurs **60**, **62** logés dans deux des éléments **24**, et fixés, par exemple par soudure, aux électrodes **30**, **32** de la membrane **18** et le circuits **22**, par exemple à des plots de celui-ci ou à des portions conductrices de l'armature **42** formant des entrées électriques du circuit **22**, notamment le circuit de conversion **36**.

La première variante présente l'avantage de pouvoir choisir une armature indépendante de la connexion entre la membrane et le circuit **22**. En revanche, les fils subissent pleinement les accélérations de la balle lors des impacts de celle-ci, ce qui les fragilise.

La seconde variante propose au contraire des connexions peu sensibles auxdites accélérations, mais nécessite en contrepartie une armature plus complexe pour le circuit **22**.

La troisième variante représente un compromis entre les deux premières variantes, les fils étant protégés par les éléments **24**, et la connexion au circuit **22** pouvant être indépendante de l'armature, par exemple en prévoyant une portion de fils disposée hors des éléments **24** pour une connexion à des plots du circuit **22.** Evidemment, ces variantes peuvent être combinées. De même, plus de deux connexions peuvent être prévues. Par exemple, dans le cas d'une membrane piézoélectrique **18** comprenant plusieurs portions électriquement isolées les unes des autres, ou membrane « pixélisée », deux connexions électriques peuvent être prévues pour chacune des portions de la membrane piézoélectrique.

Le circuit électrique **22** peut par exemple comprendre un ou plusieurs circuits électroniques alimentés en énergie électrique par la micro-batterie du circuit **22** et réalisant une fonction de traitement des impulsions électriques produites par la membrane piézoélectrique et de production de données relatives auxdites. Ainsi, le circuit **22** peut comprendre un circuit de comptage du nombre d'impulsions produites depuis la mise en service de la balle de tennis, de détermination de l'intensité moyenne ou individuelle des impulsions, et/ou de détermination de la durée moyenne ou individuelle des impulsions. Les données ainsi produites sont par exemple stockées dans une mémoire interne du circuit **22** et/ou transmises par un circuit de transmission sans fil, par exemple par radiofréquence, du circuit **22** à l'extérieur de la balle pour leur collecte. Notamment, la connaissance du nombre d'impulsions permet de connaître, outre le nombre d'impacts subis par la balle, l'état d'usure de celle-ci, puisque cet état d'usure dépend notamment directement de ce nombre. Le nombre d'impacts, leur intensité et leur durée constituent en outre des données statistiques utiles pour un joueur qui peut ainsi connaître la force de ses frappes et le type de frappes qu'il applique à la balle, etc...En outre, en traitant les impulsions produites par chaque portion d'une membrane pixélisée, il est possible de préciser les caractéristiques des frappes, leur forme et leur emprunte sur la balle..

Lors du recyclage de la balle, les moyens de stockage d'énergie électrique du circuit **22** peuvent être déchargés pour récupérer l'énergie stockée. Usuellement, les balles usées sont collectées en grand nombre et transformées en revêtement caoutchouc, à l'aide de machines de transformation. L'énergie électrique stockée dans les balles recyclées peut ainsi être récupérée pour le fonctionnement desdites machines.

Il va à présent être décrit, en relation avec les figures 11 à 14 un procédé de fabrication de la balle de tennis venant d'être décrite.

Le procédé débute par la fabrication de deux demi-coques déformables hémisphériques **12a** et **12b** qui forment la coque **12** de la balle **10** lorsqu'elles sont réunies (figure 11) et la fabrication du système de récupération d'énergie **16** ayant des éléments de maintien **24** sous forme de ressorts et solidaires à la fois de la membrane piézoélectrique **18** et du circuit électrique **22** (figure 12).

Le système de récupération **16** est ensuite placé dans l'une des demi-coques **12a** (figure 13), puis l'autre demi-coque **12b** est fixée à la demi-coque **12a**, notamment par collage, en comprimant les ressorts **24** (figure 14).

Enfin, le volume interne **14** de la balle de tennis est mis sous pression, notamment à une pression de 2 bars, ce qui a pour effet de déployer la membrane piézoélectrique souple et de la plaquer contre la paroi interne **20** de la balle **10** (figure 1).

On notera que la fabrication des deux demi-coques, de leur assemblage et de la mise sous pression de la balle sont par exemple les étapes de fabrication classiques d'une balle de tennis, la fabrication d'une balle de tennis selon l'invention différant des procédés classiques par l'insertion du système de récupération d'énergie **16** dans la balle **10**.

Une fois la balle de tennis jugée hors d'usage, il suffit pour récupérer le système **16** d'ouvrir la balle, la chute de pression résultante étant suffisante pour décoller la membrane piézoélectrique **18** de la coque **12.** Comme par ailleurs, les éléments de maintien **24** ne sont pas fixés à la coque **12**, il suffit alors de saisir le système **16** pour l'ôter de la balle.

Il a été décrit une application de l'invention à une balle de tennis. Evidemment, l'invention s'applique à tout type de balles et ballons de coques déformables, comme par exemple les ballons de football, de basket, de handball, de rugby, etc...

Un mode de réalisation de l'invention s'appliquant à un objet à coque déformable est illustré à la figure schématique en coupe 15.

Un tel objet **100** comprend une coque déformable **102** délimitant un volume interne **104.** Le volume interne **104** est par exemple naturellement présent dans l'objet, par exemple une balle ou un ballon. La paroi interne **106** de la coque **102** est par ailleurs optionnellement pourvue de picots **108**, avantageusement répartis de manière régulière sur ladite paroi. Enfin, un objet interne **110**, par exemple sphérique, est prévu dans le volume interne **104** et peut se déplacer dans celui-ci.

L'objet interne comporte une coque **112** délimitant un volume interne **114** sous pression dans lequel est inséré un système de récupération d'énergie **116** analogue au système de récupération **16** décrit précédemment et comprenant notamment une membrane piézoélectrique telle que décrite précédemment et accolées à la surface interne de la coque **110**. La coque **112** de l'objet **110** est déformable de sorte que l'objet **110** forme un ensemble analogue à la balle de tennis décrit ci-dessus.

De préférence, les picots **108** sont des éléments flexibles, ou des ressorts, afin de ne pas dégrader mécaniquement la paroi piézoélectrique souple.

L'objet **110** est par ailleurs fixé à la coque **102** au moyen d'éléments de maintien élastiques **118**, notamment des ressorts, par exemple au nombre de trois ou quatre. Les éléments de maintien **118** permettent de réduire l'impact de la présence de l'objet interne **110** sur les propriétés aérodynamiques de l'objet **100**.

Lorsque l'objet **100** subit un impact, il subit une accélération, et l'objet interne **110** vient frapper la coque **102** ce qui déforme donc sa coque **112**. La membrane piézoélectrique plaquée contre la coque produit ainsi des charges électriques qui sont ensuite stockées et/ou traitées dans le circuit **22** comme cela est décrit ci-dessus

Il a été décrit des applications au sport. Evidemment, l'invention s'applique à d'autres types d'activité, notamment les activités de rééducation physique qui utilisent des balles, des ballons, ou autres, les statistiques produites par de tels objets conformes à l'invention permettant au personnel médical d'étudier par exemple la qualité des exercices suivis par les patients.

## Revendications

1. Dispositif (10) comportant une coque déformable (12) délimitant un volume interne (14) sous une pression de gaz supérieure à la pression atmosphérique, comprenant :
▪ une membrane piézoélectrique souple (18), plaquée contre une paroi interne (20) de la coque déformable (12) sous l'effet de la pression régnant dans le volume interne (14), ladite membrane (18) étant apte à produire de l'énergie électrique sous l'effet d'une déformation de la coque (12) ;
▪ un circuit électrique (22) connecté électriquement à la membrane piézoélectrique (18), comportant un élément de stockage d'énergie électrique (38) produite par celle-ci et une structure rigide (42) ; et
▪ des éléments élastiques longilignes de maintien (24) du circuit électrique (22) selon une position prédéterminée (26) du volume interne (14), chaque élément de maintien (24) étant disposé entre la structure rigide (42) du circuit électrique (22) et la paroi interne (20) de la coque déformable (12), et étant solidaire de la membrane piézoélectrique (18) et de la structure rigide (42).

2. Dispositif selon la revendication 1, dans lequel les éléments de maintien (24) comprennent des ressorts logés en compression entre la structure rigide (42) du circuit électrique (22) et la paroi interne (20) de la coque déformable (12).

3. Dispositif selon la revendication 1 ou 2, dans lequel la coque déformable (12) définit une balle de tennis (10), dans lequel la position prédéterminée (26) est le centre de la balle de tennis (10), dans lequel le circuit électrique (22) est inscrit dans un volume sphérique (48) concentrique à la balle de tennis et de diamètre inférieur à la moitié du diamètre interne de la coque déformable (12), dans lesquels les éléments de maintien (24) sont déformables sans détérioration sur au moins environ un tiers de la longueur qu'ils présentent lorsque la balle (10) ne subit aucune déformation.

4. Dispositif selon la revendication 1, 2 ou 3, dans lequel la membrane piézoélectrique (18) comprend un film de polyfluorure de vinylidène ou de titano-zirconate de plomb (28).

5. Dispositif selon la revendication 4, dans lequel le film (28) a une épaisseur comprise entre 10 micromètres et 200 micromètres.

6. Dispositif selon l'une quelconque des revendications précédentes, dans lequel l'élément de stockage d'énergie électrique (38) comporte une micro-batterie formée sur un substrat souple ou rigide.

7. Dispositif selon l'une quelconque des revendications précédentes, dans lequel les éléments de maintien (24) sont constitués de ressorts.

8. Dispositif selon l'une quelconque des revendications précédentes, dans lequel au moins deux des éléments de maintien (24) sont conducteurs de l'électricité et forment deux connexions électriques entre la membrane piézoélectrique (18) et le circuit électrique (22) pour la transmission de l'énergie électrique produite par la membrane au circuit électrique (22).

9. Dispositif selon l'une quelconque des revendications précédentes, dans lequel le circuit électrique (22) est constitué d'étages électriques (36, 38, 40) parallélépipédiques agencés en parallèles dans un cadre rigide (42).

10. Dispositif selon l'une quelconque des revendications précédentes, dans lequel le circuit électrique (22) comporte un circuit de production de données à partir de l'énergie électrique produite par la membrane piézoélectrique (18), et un circuit de transmission sans fil desdites données à l'extérieur de la coque déformable, lesdits circuits de production et de transmission étant alimentés par l'élément de stockage d'énergie électrique.

11. Dispositif selon la revendication 10, dans lequel le circuit de production de données est apte à compter le nombre d'impulsions électriques produites par la membrane piézoélectrique (18).

12. Dispositif selon la revendication 11, dans lequel le circuit de production de données est apte à déterminer un état d'usure du dispositif en fonction du nombre d'impulsions comptées.

13. Dispositif (16) destiné à être intégré dans un volume interne d'une coque déformable portée à une pression supérieure à la pression atmosphérique, comprenant
▪ une membrane piézoélectrique souple (18) apte à générer de l'énergie électrique sous l'effet de contraintes mécaniques;
▪ un circuit électrique (22) connecté électriquement à la membrane piézoélectrique (18), comportant un élément de stockage de l'énergie électrique (38) produite par celle-ci et une structure rigide (42);
▪ des éléments élastiques longilignes (24) solidaires de la structure rigide (42) du circuit électrique (22) et solidaires de la membrane piézoélectrique (18).

14. Dispositif selon la revendication 13, dans lequel les éléments élastiques (24) comprennent des ressorts.

15. Dispositif selon la revendication 13 ou 14, dans lequel la membrane piézoélectrique (18) comprend un film de polyfluorure de vinylidène ou de titano-zirconate de plomb (28).

16. Dispositif selon la revendication 15, dans lequel le film (28) a une épaisseur comprise entre 10 micromètres et 200 micromètres.

17. Dispositif selon l'une quelconque des revendications 13 à 16, dans lequel l'élément de stockage de l'énergie électrique (38) comporte une micro-batterie formée sur un substrat souple ou rigide.

18. Dispositif selon l'une quelconque des revendications 13 à 16, dans lequel les éléments élastiques (24) sont constitués de ressorts.

19. Dispositif selon l'une quelconque des revendications 13 à 18, dans lequel au moins deux des éléments élastiques (24) sont conducteurs de l'électricité et forment deux connexions électriques entre la membrane piézoélectrique (18) et le circuit électrique (22) pour la transmission de l'énergie électrique produite par la membrane au circuit électrique.

20. Dispositif selon l'une quelconque des revendications 13 à 19, dans lequel le circuit électrique (22) est constitué d'étages électriques parallélépipédiques (36, 38, 40) agencés en parallèles dans un cadre rigide (42).

21. Dispositif selon l'une quelconque des revendications 13 à 20, dans lequel le circuit électrique (22) comporte un circuit de production de données à partie de l'énergie électrique produite par la membrane piézoélectrique et un circuit de transmission sans fil desdites données, lesdits circuits de production et de transmission étant alimentés par l'élément de stockage de l'énergie électrique.

22. Dispositif selon la revendication 21, dans lequel le circuit de production de données est apte à compter le nombre d'impulsions électriques produites par la membrane piézoélectrique (18).

23. Système comprenant une coque déformable délimitant un volume interne creux et comportant une paroi interne munie de picots rigides, et un dispositif conforme à l'une quelconque des revendications 1 à 12 logé dans le volume interne de la coque rigide.

24. Procédé de fabrication d'un dispositif (10) conforme à l'une quelconque des revendications 1 à 12 comportant une coque sphérique déformable (12) délimitant un volume interne (14) sous une pression de gaz supérieure à la pression atmosphérique, comprenant :
▪ la réalisation d'une première et d'une seconde demi-coques déformables (12a, 12b);
▪ la réalisation d'un ensemble (16) conforme à l'une quelconque des revendications 13 à 22 comportant la membrane piézoélectrique (18), le circuit électrique (22), et les éléments de maintien (24), la longueur des éléments de maintien (24) étant choisie pour que ces derniers soient en compression lorsque l'ensemble (16) soit logé dans la coque déformable (12);
▪ l'insertion de l'ensemble (16) dans la première demi-coque (12b);
▪ le report de la seconde demi-coque (12b) sur la première demi-coque (12a) de manière à former la coque déformable (12); et
▪ la mise sous pression du volume interne (14) de la coque (12) de manière à plaquer la membrane piézoélectrique (18) contre la paroi interne (20) de la coque déformable (12).

## Patentansprüche

1. Vorrichtung (10) mit einer verformbaren Schale (12), die einen Innenraum (14) begrenzt, der unter einem Gasdruck höher als der atmosphärische Druck steht, umfassend:
▪ eine flexible, piezoelektrische Membran (18), die durch die Wirkung des im Innenraum (14) herrschenden Drucks an der Innenwand (20) der verformbaren Schale (12) anliegt, wobei diese Membran (18) in der Lage ist, unter der Wirkung der Verformung der Schale (12) elektrische Energie zu erzeugen;
▪ einen elektrisch mit der piezoelektrischen Membran (18) verbundenen Schaltkreis (22), der ein Element zur Speicherung der von ihr erzeugten elektrischen Energie (38), sowie eine starre Struktur (42) enthält; und
▪ elastische, längliche Halteelemente (24), um den elektrischen Schaltkreis (22) in einer vorher festgelegten Position (26) im Innenraum (14) zu halten, wobei jedes Halteelement (24) zwischen der starren Struktur (42) des elektrischen Schaltkreises (22) und der Innenwand (20) der verformbaren Schale (12) angeordnet ist, und fest mit der piezoelektrischen Membran (18) der starren Struktur (42) verbunden ist.

2. Vorrichtung gemäß Anspruch 1, bei der die Halteelemente (24) Federn umfassen, die in komprimiertem Zustand zwischen der starren Struktur (42) des elektrischen Schaltkreises (22) und der Innenwand (20) der verformbaren Schale (12) untergebracht sind.

3. Vorrichtung gemäß Anspruch 1 oder 2, bei der die verformbare Schale (12) einen Tennisball (10) definiert, und bei der die vorher festgelegte Position (26) das Zentrum des Tennisballs (10) ist, bei der der elektrische Schaltkreis (22) innerhalb eines zum Tennisball konzentrischen, kugelförmigen Raums (48) liegt, dessen Durchmesser kleiner ist als der halbe Innendurchmesser der verformbaren Schale (12), worin die Haltelemente (24) ohne Beschädigung bis auf mindestens ein Drittel ihrer Länge verformt werden können, die sie haben, wenn der Ball (10) nicht verformt wird.

4. Vorrichtung gemäß Anspruch 1, 2 oder 3, bei der die piezoelektrische Membran (18) einen Polyvinylidenfluorid- oder Blei-Zirkonat-Titanat-Film (28) enthält.

5. Vorrichtung gemäß Anspruch 4, bei dem der Film (28) eine Dicke zwischen 10 Mikrometern und 200 Mikrometern hat.

6. Vorrichtung gemäß einem der vorhergehenden Ansprüche, in denen das Speicherelement für elektrische Energie (38) eine Mikrobatterie enthält, die auf einem flexiblen oder starren Substrat gebildet wird.

7. Vorrichtung gemäß einem der vorhergehenden Ansprüche, **dadurch gekennzeichnet, dass** die Halteelemente (24) aus Federn bestehen.

8. Vorrichtung gemäß einem der vorhergehenden Ansprüche, bei dem mindestens zwei der Halteelemente (24) elektrische Leiter sind und zwei elektrische Verbindungen zwischen der piezoelektrischen Membran (18) und dem Schaltkreis (22) bilden, um die von der Membran im Schaltkreis (22) erzeugte elektrische Energie zu übertragen.

9. Vorrichtung gemäß einem der vorhergehenden Ansprüche, **dadurch gekennzeichnet, dass** der elektrische Schaltkreis (22) aus quaderförmigen elektrischen Stufen (36, 38, 40) besteht, die parallel in einem starren Rahmen (42) angeordnet sind.

10. Vorrichtung gemäß einem der vorhergehenden Ansprüche, bei der der Schaltkreis (22) einen Kreislauf zur Datenerzeugung, ausgehend von der durch die piezoelektrische Membran (18) erzeugten elektrischen Energie, sowie einen drahtlosen Übertragungskreislauf dieser Daten nach außerhalb der verformbaren Schale enthält, wobei diese Kreisläufe zur Erzeugung und Übertragung vom Element zur Speicherung der elektrischen Energie versorgt werden.

11. Vorrichtung gemäß Anspruch 10, bei der der Datenerzeugungsschaltkreis in der Lage ist, die Zahl der von der piezoelektrischen Membran (18) erzeugten Impulse zu zählen.

12. Vorrichtung gemäß Anspruch 11, bei der der Datenerzeugungsschaltkreis in der Lage ist, den Stand der Abnutzung der Vorrichtung in Abhängigkeit von der Anzahl der gezählten Impulse zu bestimmen.

13. Vorrichtung (16) zum Einbau im Innenraum einer verformbaren Schale, wobei der Druck über den atmosphärischen Druck erhöht wird, umfassend
▪ eine flexible piezoelektrische Membran (18), die in der Lage ist, unter dem Einfluss mechanischer Beanspruchungen elektrische Energie zu erzeugen;
▪ einen elektrisch mit der piezoelektrischen Membran (18) verbundenen Schaltkreis (22), der ein Element zur Speicherung der von ihr erzeugten elektrischen Energie (38) sowie eine starre Struktur (42) enthält;
▪ elastische, längliche Halteelemente (24), die fest mit der starren Struktur (42) des Schaltkreises (22) und fest mit der piezoelektrischen Membran (18) verbunden sind.

14. Vorrichtung gemäß Anspruch 13, bei dem die elastischen Elemente (24) Federn umfassen.

15. Vorrichtung gemäß Anspruch 13 oder 14, bei der die piezoelektrische Membran (18) einen Polyvinylidenfluorid- oder Blei-Zirkonat-Titanat-Film (28) enthält.

16. Vorrichtung gemäß Anspruch 15, bei dem der Film (28) eine Dicke zwischen 10 Mikrometern und 200 Mikrometern hat.

17. Vorrichtung gemäß einem der Ansprüche 13 bis 16, in denen das Speicherelement für elektrische Energie (38) eine Mikrobatterie enthält, die auf einem flexiblen oder starren Substrat gebildet wird.

18. Vorrichtung gemäß einem der Ansprüche 13 bis 16, bei dem die Halteelemente (24) aus Federn bestehen.

19. Vorrichtung gemäß einem der Ansprüche 13 bis 18, bei dem mindestens zwei der Halteelemente (24) elektrische Leiter sind und zwei elektrische Verbindungen zwischen der piezoelektrischen Membran (18) und dem elektrischen Schaltkreis (22) bilden, um die von der Membran erzeugte elektrische Energie an den Schaltkreis zu übertragen.

20. Vorrichtung gemäß einem der Ansprüche 13 bis 19, bei der der Schaltkreis (22) aus quaderförmigen elektrischen Stufen (36, 38, 40) besteht, die parallel in einem starren Rahmen (42) angeordnet sind.

21. Vorrichtung gemäß einem der Ansprüche 13 bis 20, bei der der Schaltkreis (22) einen Kreislauf zur Datenerzeugung aus der durch die piezoelektrische Membran erzeugten elektrischen Energie sowie einen drahtlosen Übertragungskreislauf dieser Daten umfasst, wobei diese Kreisläufe zur Erzeugung und Übertragung vom Element zur Speicherung der elektrischen Energie versorgt werden.

22. Vorrichtung gemäß Anspruch 21, bei der der Datenerzeugungsschaltkreis in der Lage ist, die Zahl der von der piezoelektrischen Membran (18) erzeugten Impulse zu zählen.

23. System mit einer verformbaren Schale, die einen hohlen Innenraum begrenzt und eine Innenwand umfasst, die mit starren Noppen versehen ist, sowie mit einer Vorrichtung, die gemäß einem der Ansprüche 1 bis 12 im Innenraum der starren Schale untergebracht ist.

24. Verfahren zur Herstellung einer Vorrichtung (10) nach einem der Ansprüche 1 bis 12, die eine verformbare sphärische Schale (12) umfasst, die einen Innenraum (14) mit einem Gasdruck höher als der atmosphärische Druck begrenzt, umfassend:
▪ die Ausführung einer ersten und einer zweiten verformbaren Halbschale (12a, 12b);
▪ die Herstellung einer Einheit (16) gemäß einem der Ansprüche 13 bis 22, die die piezoelektrische Membran (18), den Schaltkreis (22) und die Halteelemente (24), enthält, wobei die Länge der Halteelemente (24) so gewählt wird, dass diese komprimiert sind, wenn die Einheit (16) in der verformbaren Schale (12) untergebracht wird;
▪ das Einsetzen der Einheit (16) in die erste Halbschale (12b);
▪ das Aufsetzen der zweiten Halbschale (12b) auf die erste Halbschale (12a), so dass beide die verformbare Schale (12) bilden; und
▪ die Druckbeaufschlagung des Innenraums (14) der Schale (12), so dass die piezoelektrische Membran (18) gegen die Innenwand (20) der verformbaren Schale (12) gedrückt wird.

## Claims

1. A device (10) comprising a deformable shell (12) defining an inner space (14) under a gas pressure higher than the atmospheric pressure, comprising:
▪ a flexible piezoelectric membrane (18), applied against an inner wall (20) of the deformable shell (12) under the effect of the pressure present in the inner space (14), said membrane (18) being capable of generating electric energy under the effect of a deformation of the shell (12);
▪ an electric circuit (22) electrically connected to the piezoelectric membrane (18), comprising an element for storing the electric energy (38) that it generates and a rigid structure (42); and
▪ longilineal resilient elements (24) for holding the electric circuit (22) according to a predetermined position (26) of the inner space (14), each holding element (24) being arranged between the rigid structure (42) of the electric circuit (22) and the inner wall (20) of the deformable shell (12) and being secured to the piezoelectric membrane (18) and to the rigid structure (42).

2. The device of claim 1, wherein the holding elements (24) comprise springs compressed between the rigid structure (42) of the electric circuit (22) and the inner wall (20) of the deformable shell (12).

3. The device of claim 1 or 2, wherein the deformable shell (12) defines a tennis ball (10), wherein the predetermined position (26) is the center of the tennis ball (10), wherein the electric circuit (22) is inscribed within a spherical volume (48) concentric to the tennis ball and having a diameter smaller than half the inner diameter of the deformable shell (12), wherein the holding elements (24) are deformable with no deterioration over approximately at least one third of the length that they have when the ball (10) is submitted to no deformation.

4. The device of claim 1, 2, or 3, wherein the piezoelectric membrane (18) comprises a polyvinylidene fluoride or lead zirconium titanium film (28).

5. The device of claim 4, wherein the film (28) has a thickness in the range from 10 micrometers to 200 micrometers.

6. The device of any of the foregoing claims, wherein the electric energy storage element (38) comprises a microbattery formed on a flexible or rigid substrate.

7. The device of any of the foregoing claims, wherein the holding elements (24) are formed of springs.

8. The device of any of the foregoing claims, wherein at least two of the holding elements (24) are electrically conductive and form two electric connections between the piezoelectric membrane (18) and the electric circuit (22) for the transmission of the electric energy generated by the membrane to the electric circuit (22).

9. The device of any of the foregoing claims, wherein the electric circuit (22) is formed of parallelepipedal electric stages (36, 38, 40) arranged in parallel in a rigid frame (42).

10. The device of any of the foregoing claims, wherein the electric circuit (22) comprises a circuit for generating data from the electric energy generated by the piezoelectric membrane (18), and a circuit of wireless transmission of said data outside of the deformable shell, said generation and transmission circuits being powered by the electric energy storage element.

11. The device of claim 10, wherein the data generation circuit is capable of counting the number of electric pulses generated by the piezoelectric membrane (18).

12. The device of claim 11, wherein the data generation circuit is capable of determining a wearing state of the device according to the number of counter pulses.

13. A device (16) intended to be integrated in an inner space of a deformable shell taken to a pressure higher than the atmospheric pressure, comprising:
▪ a flexible piezoelectric membrane (18) capable of generating electric energy under the effect of mechanical stress;
▪ an electric circuit (22) electrically connected to the piezoelectric membrane (18), comprising an element for storing the electric energy (38) that it generates and a rigid structure (42);
▪ longilineal resilient elements (24) secured to the rigid structure (42) of the electric circuit (22) and secured to the piezoelectric membrane (18).

14. The device of claim 13, wherein the resilient elements (24) comprise springs.

15. The device of claim 13 or 14, wherein the piezoelectric membrane (18) comprises a polyvinylidene fluoride or lead zirconium titanium film (28).

16. The device of claim 15, wherein the film (28) has a thickness in the range from 10 micrometers to 200 micrometers.

17. The device of any of claims 13 to 16, wherein the electric energy storage element (38) comprises a microbattery formed on a flexible or rigid substrate.

18. The device of any of claims 13 to 16, wherein the resilient elements (24) are formed of springs.

19. The device of any of claims 13 to 18, wherein at least two of the resilient elements (24) are electrically conductive and form two electric connections between the piezoelectric membrane (18) and the electric circuit (22) for the transmission of the electric energy generated by the membrane to the electric circuit.

20. The device of any of claims 13 to 19, wherein the electric circuit (22) is formed of parallelepipedal electric stages (36, 38, 40) arranged in parallel in a rigid frame (42).

21. The device of any of claims 13 to 20, wherein the electric circuit (22) comprises a circuit for generating data from the electric energy generated by the piezoelectric membrane, and a circuit of wireless transmission of said data, said generation and transmission circuits being powered by the electric energy storage element.

22. The device of claim 21, wherein the data generation circuit is capable of counting the number of electric pulses generated by the piezoelectric membrane (18).

23. A system comprising a deformable shell defining a hollow inner space and comprising an inner wall provided with rigid spikes, and the device of any of claims 1 to 12 housed in the inner space of the rigid shell.

24. A method of manufacturing a device (10) according to any of claims 1 to 12, comprising a spherical deformable shell (12) defining an inner space (14) under a gas pressure higher than the atmospheric pressure, comprising:
▪ forming a first and a second deformable half-shells (12a, 12b);
▪ forming an assembly (16) according to any of claims 13 to 22 comprising the piezoelectric membrane (18), the electric circuit (22), and the holding elements (24), the length of the holding elements (24) being selected so that the latter are compressed when the assembly (16) is housed in the deformable shell (12);
▪ inserting the assembly (16) into the first half-shell (12b);
▪ placing the second half-shell (12b) on the first half-shell (12a) to form the deformable shell (12); and
▪ pressurizing the inner space (14) of the shell (12) to apply the piezoelectric membrane (18) against the inner wall (20) of the deformable shell (12).
